# EUROPEAN PATENT APPLICATION

(11) **EP 3 704 954 A1**
(43) Date of publication of application: **09.09.2020**
(21) Application number: 19160796.9
(22) Date of filing: 05.03.2019
(51) Int. Cl.: A23L 29/00, A23L 27/00, A23L 27/30, A23L 33/22, A23L 2/39, A23L 2/52, A23L 2/60, A23G 1/56, A23G 3/38, A23G 3/42

(54) **MIXTURE COMPRISING D-ALLULOSE AND TASTE MODIFYING COMPOUNDS**

(71) Applicant: Symrise AG, 37603 Holzminden Niedersachsen (DE)
(72) Inventor: Kennison, Deborah, Teterboro,, NJ New Jersey 07608 (US); Croce, Melanie, Teterboro,, NJ New Jersey 07608 (US); Riess, Thomas, 37603 Holzminden (DE); Krammer, Gerhard, 37603 Holzminden (DE); Ley, Jakob Peter, 37603 Holzminden (DE); Reichelt, Katharina, 37603 Holzminden (DE); Paetz, Susanne, 37671 Höxter (DE); Somers, Tom, 37603 Holzminden (DE); Verwohlt, Morine, 37627 Wangelnstedt (DE)
(74) Representative: Eisenführ Speiser

(57) **Abstract**

The present invention primarily relates to a mixture comprising or consisting of a) D-allulose and b) a taste modifying compound selected from the group consisting of hesperetin, hersperetindihydrochalcone, phloretin, glycosylated rubusosides, balansines, phyllodulcin, eriodictyol, homoeriodictyol, matairesinol, and mixtures thereof. A further aspect of the present invention relates to a food or beverage product comprising a mixture according to the present invention.

## Description

The present invention primarily relates to a mixture comprising or consisting of a) D-allulose and b) a taste modifying compound selected from the group consisting of hesperetin, hersperetindihydrochalcone, phloretin, glycosylated rubusosides, balansines, phyllodulcin, eriodictyol, homoeriodictyol, matairesinol, and mixtures thereof. A further aspect of the present invention relates to a food or beverage product comprising a mixture according to the present invention.

Further aspects of the present invention and preferred embodiments thereof will emerge from the following description and accompanying claims.

Consumers generally have a strong preference for foodstuffs or indulgence foods which have a large amount of high caloric sugar (particularly sucrose = saccharose, glucose or fructose or mixtures thereof) due to the sweetness and sweetness profile thereof. On the other hand, it is generally known that a large content of readily metabolizable carbohydrates causes a steep rise in blood sugar levels, leads to the formation of fat deposits and ultimately can result in health problems such as being overweight, obesity, insulin resistance, age-onset diabetes and complications thereof. Another particular aggravating factor is that many of the above-mentioned carbohydrates can also have an adverse effect on dental health, as they are decomposed by specific types of bacteria in the oral cavity into lactic acid, for example, and can attack the enamel of milk teeth or adult teeth (caries).

Therefore, it has long been an objective to reduce the high caloric sugar content of food or beverage products to the level which is absolutely necessary or below. A suitable measure is to use sweeteners: these are chemically uniform substances which themselves have no, or only a very low calorific value, while at the same time providing a strong sweet taste sensation; in general, the substances are non-cariogenic (a review can be found, for example in Journal of the American Dietetic Association 2004, 104 (2), 255-275).

Although so-called bulk sweeteners such as sorbitol, mannitol or other sugar alcohols are to some extent excellent sweeteners and can also replace to some extent the other foodstuff characteristics of high caloric sugars, when ingested too frequently by a proportion of the population they lead to osmotically conditioned digestion problems.

Due to their low application concentration, non-nutritive, high-intensity sweeteners are indeed very suitable for introducing sweetness into foodstuffs, however they often exhibit problems in respect of taste due to dissimilar time-intensity profiles (i.e. sweetness profiles) compared to high caloric sugars, in particular to sucrose, (for example sucralose, steviosides, cyclamate), a bitter and/or astringent aftertaste (for example acesulfame-K, saccharin or its salts, steviosides, rebaudiosides) and/or pronounced additional flavor sensations such as "licorice" (for example glycyrrhizic acid ammonium salt). Some of the sweeteners are not particularly heat-stable (for example thaumatin, brazzein, monellin), are not stable in every application (for example aspartame) and some have a very long-lasting sweet effect (strong sweet aftertaste, for example saccharin, sucralose, rebaudiosides).

One possibility - without using non-nutritive sweeteners - is to reduce the high caloric sugar content of food or beverage products and to add substances which are sensorially faintly detectable or undetectable and which indirectly or directly enhance the sweetness, as described, for example in WO 2005/041684. However, the substances described in WO 2005/041684 are explicitly of a non-natural origin and thus, from a toxicological point of view, are more difficult to assess than substances of a natural origin, particularly if the latter occur in foodstuffs or indulgence foods or originate from raw materials for the production of food or beverage products. EP 1 291 342 describes such substances of a natural origin (pyridinium betaines); however, these substances do not influence the sweet taste selectively, but also influence other taste flavors such as umami or saltiness. Furthermore, the disclosed substances can only be purified with great effort.

A different approach to reduce the high caloric sugar content of food or beverage products is to replace high caloric sugar by allulose (synonym to psicose). Allulose contains almost no calories content and yields less than about 5% of the calories of the equivalent amount of sucrose but exhibits about 70 % of the sweetness intensity of sucrose. However, even if allulose is a natural sugar and the taste and sweetness profile of allulose is very close to that of sucrose there are also differences. The start of the sweetness of allulose is slower than of sucrose. Furthermore, it is possible that allulose imparts (mostly undesirable) off-tastes to food or beverage products, typically bitter, rindy, zesty, astringent, or an undesirable lingering sweetness. Moreover, the use of allulose alone as a replacement for high caloric sugar has some limitations due to cost and digestive tolerance in some applications at higher concentrations.

The primary object of the present invention was to provide mixtures that can be used in food or beverage products that have a reduced amount of high caloric sugars to improve the sweet impact and mouthfeel and to reduce the sweet lingering profile and bitter after-taste of the food or beverage products while the food or beverage products show the same or a similar sweetness taste as products with a high amount of high caloric sugars.

The primary object of the present invention is achieved by a mixture comprising or consisting of
a) D-allulose
   and
b) a taste modifying compound selected from the group consisting of hesperetin, hesperetindihydrochalcone, phloretin, alpha-glycosyl rubusosides, balansines, phyllodulcin, eriodictyol, homoeriodictyol, matairesinol, and mixtures thereof.

Hesperetin including its enantiomers and salts and their mixtures as used in mixtures according to the present invention are known to the person skilled in the art and are for example described in the European patent EP 1 909 599 B1.

Hesperetindihydrochalcone including salts and their mixtures as used in mixtures according to the present invention are known to the person skilled in the art and are for example described in the patent application WO 2017/186299.

Phloretin including salts and their mixtures as used in mixtures according to the present invention are known to the person skilled in the art and are for example described in the European patent EP 1 998 636 B1.

Eriodictyol, homoeriodictyol including their enantiomers and salts and their mixtures as used in mixtures according to the present invention are known to the person skilled in the art and are for example described in the European patent EP 1 258 200 B1.

Matairesinol including its enantiomers and salts and their mixtures as used in mixtures according to the present invention are known to the person skilled in the art and are for example described in the patent application WO 2012/146584.

Phyllodulcin including its enantiomers and salts and their mixtures as used in mixtures according to the present invention are known to the person skilled in the art and are for example described in the European patent EP 2 298 084 B1. alpha-Glycosyl rubusosides as used in mixtures according to the present invention are known to the person skilled in the art and are for example described in the patent application WO 2015/189346 (A1).

Balansines as used in mixtures according to the present invention are compounds of the formula (I) or the physiologically acceptable salts of the compounds of the formula (I) 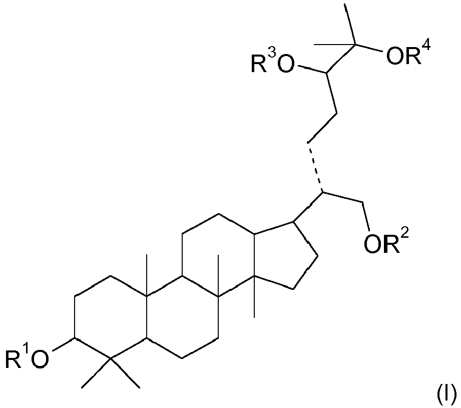 where the dotted line represents a single or a double bond, and R¹, R², R³ and R⁴ each represent independently of each other hydrogen or a sugar residue, preferably a monosaccharide residue or an oligosaccharide residue, characterised in that the countercation of the physiologically acceptable salt of the compound of the formula (I) is preferably selected from the group consisting of single positively charged cations from the first primary and secondary group, ammonium ion, trialkyl ammonium ions, divalently charged cations from the second secondary group, trivalent cations from the third primary and secondary group, and preferably selected from the group consisting of Na⁺, K⁺, NH₄⁺, Ca²⁺, Mg²⁺, Al³⁺ and Zn²⁺. Balansines as used according to the present inventions are for example described in the patent application WO 2012/164062 (A1). The preferred balansines as described on page 5, line 7 to page 12, line 4 of the WO 2012/164062 (A1) are also preferred balansines according to the present invention.

According to the invention, the two following stereoisomers (hereinafter called Balansin A and Balansin B) are most particularly preferred balansines.

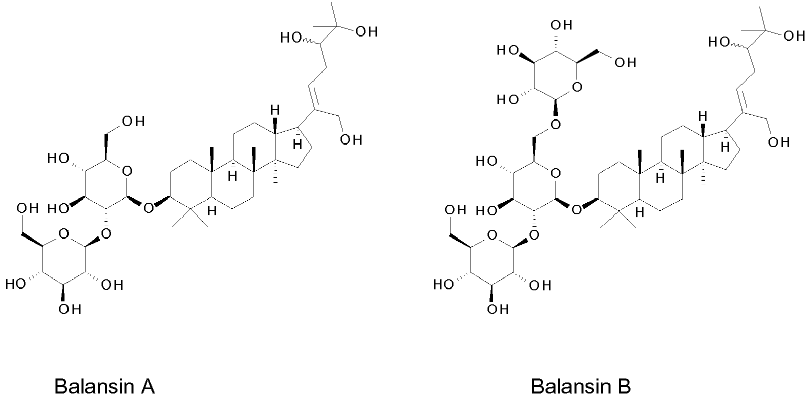

It was surprisingly found that a mixture of D-allulose and the above specified taste modifying compounds can be used as replacement of a part of the otherwise used amount of high caloric sugars in food or beverage products to reduce the caloric value of such products. At the same time the resulting food or beverage products shows an improved sweet impact and mouthfeel and a reduced sweet lingering profile and reduced off-tastes.

A mixture according to the present invention is preferred, wherein the mixture comprises
b1) a taste modifying compound selected from the group consisting of hesperetin, homoeriodictyol, eriodictyol, phloretin, matairesinol, and mixtures thereof
   and
b2) a taste modifying compound selected from the group consisting of hersperetindihydrochalcone, alpha-glycosyl rubusosides, balansines, phyllodulcin, and mixtures thereof.

It was surprisingly found that a mixture of D-allulose with a taste modifying compound from the group b1 and b2 leads to a further improved sweet impact and mouthfeel and a reduced sweet lingering profile and reduced off-tastes or the resulting food or beverage products.

A mixture according to the present invention is preferred, wherein the weight ratio of D-allulose to the total mass of all compounds of group b) ranges from 100,000 : 1 to 10 : 1, preferably ranges from 50,000 : 1 to 50 : 1, more preferably ranges from 50,000 : 1 to 100 : 1.

A mixture according to the present invention is preferred, wherein the weight ratio of the total mass of all compounds of group b1) to the total mass of all compounds of group b2) ranges from 100 : 1 to 1 : 100, preferably ranges from 10 : 1 to 1 : 10, more preferably, from 5 : 1 to 1 : 5.

A mixture according to the present invention is preferred, further comprising one or more substances, selected from the group consisting of flavorings and/or aromatic substances.

Mixtures according to the invention preferably contain at least one, two, three, four, five, six, seven, eight or more flavorings and/or aromatic substances.

In the context of the present invention, the (one or more) flavorings and/or aromatic substances to be used are preferably selected from the following group consisting of:
aliphatic flavouring substances, especially saturated aliphatic alcohols, such as ethanol, isopronanol, butanol, isoamyl alcohol, hexanol, 2-heptanol, octanol (1/2/3), decanol, unsaturated aliphatic alcohols, such as cis-2 pentenol, cis-3 hexenol, trans-2 hexenol, trans-3 hexenol, cis-2 octenol, 1-octen-3-ol, cis-6 nonen-1-ol, trans-2, cis-6 Nonadienol, aliphatic aldehydes such as saturated aliphatic aldehydes (e.g. acetaldehyde, propionaldehyde, butyraldehyde, isobutyraldehyde, valeraldehyde, isolvaleraldehyde, hexanal, 3-methyl hexanal, octanal, nonanal, or mono- or multi-unsaturated aliphatic aldehydes, such as 2-methyl but-2-enal, trans-2 hexenal, cis-3 hexenal, cis-4 hexenal, trans-2 octenal, trans-2 nonenal, cis-6 nonenal, trans-2, cis-6 nonadienal, trans 2 decenal, trans-2, trans-decadienal, aliphatic ketones, e.g. saturated ketones (such as 2-butanone, 2-pentanone, 2-heptanone, 2-octanone, 2-methylheptan-3-one, 2-decanone, 2-undecanone), unsaturated ketones (such as 1-penten-3-one, 1-hexen-3-one, 5-methyl-3-hexenone, 3-hepten-2-one, 1-octen-3-one, 2-octen-4-one, 3-octen-2-one, 3-none-2-one), aliphatic diketones and aliphatic diketoles, e.g. diacetyl, acetyl methyl carbinol, 2,3-hexanedione, aliphatic acids, such as straight-chain saturated acids, such as acetic acid, propionic acid, butyric acid, isobutyric acid, valeric acid, heptanoic acid, octanoic acid, decanoic acid, branched-chain saturated acids, such as 2-methyl heptanoic acid, 4-ethyl octanoic acid, and unsaturated acids, such as 2-butenoic acid, 2-pentenoic acid, 4-pentenoic acid, 2-methyl pentenoic acid, trans-3 hexenoic acid, cis-3 hexenoic acid, 3-octenoic acid, linoleic acid), aliphatic esters, such as saturated esters, e.g. methyl acetate, methylbutyrate, methyl-2-methylbutyrate, methyl hexanoate, ethylacetate, ethylbutyrate, ethyl-2-methylbutyrate, ethyl-3-methylbutyrate, ethyl hexanoate, ethyl decanoate, isopropyl acetate, isobutyl acetate, isobutyl valerate, isoamyl acetate, isoamyl butyrate, isoamyl isovalerate, hexyl acetate, hexyl hexanoate, 3-octyl acetate and unsaturated esters, such as methyl 2-hexenoate, allyl hexanoate, cis-3 hexenyl acetate, cis-3 hexenyl butyrate, aliphatic thiols and dithiols (e.g. propane thiol, allyl mercaptan, 1-methoxy-3-methylbutane-3-thiol, dimethyl sulfide, dimethyl trisulfide, dipropyl sulfide, diallyl trisulfide, other aliphatic sulfur compounds, such as 2-mercapto-3-butanol, methyl thio propanal, 3-mercapto-pentanone, 4-methoxy-2-methyl-2-mercaptobutanone, methyl thiobutyrate, methyl thiobutyrate, methyl 3-methylthiopropionate, aliphatic nitrogen compounds, such as butyl amine, trimethyl amine, allyl isothiocyanate, isopropyl isothiocyanate, alicyclic compounds, such as alicyclic ketones, e.g. cis-jasmone, isophorone, 4-ketoisophorone, alicyclic esters such as methyl jasmonate, hedione, terpenes, e.g. terpene alcohols, such as linalool, citronellol, geraniol, nerol, alpha terpineol, menthol, 8-p-menthene-1,2-diol, fenchol, borneol, nerolidol, hotrienol, terpene aldehydes such as geranial, neral, citronellal, beta-sinensal, terpene ketones, such as alpha-ionone, (D)-carvone, (L)-carvone, nootkatone, piperitone, menthone, alpha damascone, beta damascene, damascenone, terpene esters, such as linalyl acetate, geranyl acetate, citronellyl actetate, carvyl acetate, fenchyl acetate, terpene sulphur compounds, 4-mentha-8-thiol-3-one, thiogeraniol, para-menth-1-ene-8-thiol, mercapto p-menthan-3-one, terpene hydrocarbons, such as D-limonene, L-limonene, alpha-pinene, beta-pinene, ocimene, alpha-terpinene, gamma-terpinene, beta-bisabolene, valencene, terpene oxides, such as 1,8-cineole, rose oxide, mint lactone, menthofuran, aromatic compounds, e.g. aromatic alcohols, such as benzyl alcohol, cinnamyl alcohol, 2-phenyl alcohol, aromatic aldehydes, such as benzaldehyde, cinnamic aldehyde, 5-methyl-2-phenylhexenal, salicylaldehyde, 4-hydroxy benzaldehyde, cyclamen aldehyde, 2-phenyl-2-butenal, aromatic acids, such as 2-phenyl acetic acid, cinnamic acid, aromatic esters such as benzyl acetate, benzyl salicylate, anisyl acetate, methyl phenyl acetate, methyl benzoate, methyl salicylate, methyl cinnamate, aromatic phenols, such as phenol, ortho-cresol, para-cresol, 2,3-dimethyl phenyl, 2-ethyl phenol, 2,3,5-trimethyl phenol, 4-vinyl phenol, guaiacol, 4-vinyl guaiacol, eugenol, thymol, carvacrol, aromatic sulphur compounds, such as thiophenol, diphenyl disulphide, aromatic nitrogen compounds, such as methyl anthranilate, methyl N-methyl anthranilate, aromatic ethers such as vanillin, ethylvanillin, anethol, aromatic oxides, such as heliotropine, diphenyl oxide, aromatic lactones, such as coumarin, dihydro coumarin, heterocyclic compounds, such as heterocyclic lactones, e.g. gamma butyrolactone, gamma-nonalactone, gamma decalactone, delta decalactone, jasmin lactone, delta dodecalactone, ambrettolide, heterocyclic furanes, such as furfuryl alcohol, furfural, 2-acetyl furan, theaspirane, 2-methyl tetrahydro furan-3-one, furfuryl mercaptane, 2-methyl 3-furanthiol, 2-methyl 3-tetrahydro furanthiol, difurfuryl sulfide, difurfuryl disulfide, heterocyclic pyrans, such as maltol, ethyl maltole, rose oxide, maltol isobutyrate, heterocyclic pyrroles such as indole, 2-acetyle pyrrole, pyrrolidine, heterocyclic pyrazines, such as 2-methyl pyrazine, 2,3-dimethyl pyrazine, 2-methyl 3-ethyl pyrazine, trimethyl pyrazine, 2-acetyl pyrazine, 2-methoxy 3-methyl pyrazine, 2-methoxy 3-ethyl pyrazine, 2-methoxy 3-isobutyl pyrazine, 2-ethyl 3-methylthio pyrazine, heterocyclic thiazoles, such as thiazole, 2-methyl thiazole, 4-methyl 5-vinyl thiazole, 2-isobutyl thiazole, 2-acetyl thiazole,
flavouring raw materials and flavouring preparations, e.g. essential oils, concretes, absolutes, extract or tinctures from raw materials such citrus (e.g. lemon, lime, mandarine, bergamotte, grapefruit bitter orange, peel or essence oils), herbs (dill, parsley, cumin, rosemary, sage, clary sage, basil, tarragon, thyme, oregano, savoury, majoram, all spice, mace, nutmeg, clove leave, clove bud, caraway, cinnamom leaves, cinnamom bark, cassia, cardamom, ginger, galangal, turmeric, coriander seed, coriander leaf, fenugreek, juniper berry, wormwood, laurel leaves, eucalyptus, white pepper, green pepper, white pepper, carrot seed, celery seed, lovage leaf, asa foetida, onion, leek, garlic, mustard, horse radish, capsicum, paprika, sea weed, valerian oil, fir needle, spearmint, peppermint, wintergreen, buchu leaf, black currant buds, fennel, star anise, jambu, long pepper, davana, orris, mimosa, cassie, violet leaves, ho leaf, jasmin, ylang ylang, cananga, osmanthus, angelica, clary sage, ambrette seed, hops, camomile, lavender, rose, geranium, citronella, palmarosa, litsea cubeba, lemon grass, tagetes, neroli, petitgrain, mate, cognac oil, coffee, cola nut, cocoa, green tea, black tea, white tea, gentian, tolu balm, benzoe resin, peru balm, cascarilla, galbanum, vetiver, labdanum, patchouli, sandalwood, cedarwood, guaiac wood, oak wood, massoi bark, vanilla pods, tonka bean, as well as enriched fractions thereof,
juice concentrates, such as orange juice, lemon juice, strawberry, cherry juice, or passion fruit juice concentrates, waterphases and recoveries from raw materials such as citrus (lemon, lime, orange, mandarine, grapefruit), red fruits (raspberry, strawberry, blueberry, blackberry, red and black currant, ...), yellow fruits (peach, apricot, nectarine, banana, ...), tropical fruits (mango, passionfruit, pineapple, lychee, ...), vegetables (e.g. cucumber, tomato) and spices (e.g. ginger),
acetophenone, allyl caproate, alpha-ionone, beta-ionone, anisaldehyde, anisyl acetate, anisyl formate, benzaldehyde, benzothiazole, benzyl acetate, benzyl alcohol, benzyl benzoate, beta-ionone, butyl butyrate, butyl caproate, butylidene phthalide, carvone, camphene, caryophyllene, cineol, cinnamyl acetate, citral, citronellol, citronellal, citronellyl acetate, cyclohexyl acetate, cymene, damascone, decalactone, dihydrocoumarin, dimethyl anthranilate, dodecalactone, ethoxyethyl acetate, ethylbutyric acid, ethyl butyrate, ethyl caprate, ethyl caproate, ethyl crotonate, ethylfuraneol, ethylguaiacol, ethylisobutyrate, ethylisovalerate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, geranyl acetate, grapefruit aldehyde, methyl dihydrojasmonate (e.g. Hedion®), heliotropin, 2-heptanone, 3-heptanone, 4-heptanone, trans-2-heptenal, cis-4-heptenal, trans-2-hexenal, cis-3-hexenol, trans-2-hexenoic acid, trans-3-hexenoic acid, cis-2-hexenyl acetate, cis-3-hexenyl acetate, cis-3-hexenyl caproate, trans-2-hexenyl caproate, cis-3-hexenyl formate, cis-2-hexyl acetate, cis-3-hexyl acetate, trans-2-hexyl acetate, cis-3-hexyl formate, para-hydroxybenzyl acetone, isoamyl alcohol, isoamyl isovalerate, isobutyl butyrate, isobutyraldehyde, isoeugenol methyl ether, isopropyl methylthiazole, lauric acid, levulinic acid, linalool, linalool oxide, linalyl acetate, menthol, menthofuran, methyl anthranilate, methylbutanol, methylbutyric acid, 2-methylbutyl acetate, methyl caproate, methyl cinnamate, 5-methylfurfural, 3,2,2-methylcyclopentenolone, 6,5,2-methylheptenone, methyl dihydrojasmonate, methyl jasmonate, 2-methylmethyl butyrate, 2-methyl-2-pentenol acid, methylthiobutyrate, 3,1-methylthiohexanol, 3-methylthiohexyl acetate, nerol, nerol acetate, trans,trans-2,4-nonadienal, 2,4-nonadienol, 2,6-nonadienol, 2,4-nonadienol, nootkatone, delta-octalactone, gamma-octalactone, 2-octanol, 3-octanol, 1,3-octenol, 1-octyl acetate, 3-octyl acetate, palmitic acid, paraldehyde, phellandrene, pentanedione, phenylethyl acetate, phenylethyl alcohol, phenylethyl isovalerate, piperonal, propionaldehyde, propyl butyrate, pulegone, pulegol, sinensal, sulfurol, terpinene, terpineol, terpinolene, 8,3-s thiomenthanone, 4,4,2-thiomethylpentanone, thymol, delta-undecalactone, gamma-undecalactone, valencene, valeric acid, vanillin, acetoin, ethylvanillin, ethylvanillin isobutyrate (=3-ethoxy-4-isobutyryloxybenzaldehyde), 2,5-dimethyl-4-hydroxy-3 (2H)-furanone and derivatives thereof (here preferably homofuraneol (=2-ethyl-4-hydroxy-5-methyl-3(2H)-furanone), homofuronol (=2-ethyl-5-methyl-4-hydroxy-3(2H)-furanone and 5-ethyl-2-methyl-4-hydroxy-3(2H)-furanone), maltol and maltol derivatives (here preferably ethyl maltol), coumarin and coumarin derivatives, gamma-lactones (here preferably gamma-undecalactone, gamma-nonalactone, gamma-decalactone), delta-lactones (here preferably 4-methyldeltadecalactone, massoilactone, deltadecalactone, tuberolactone), methyl sorbate, divanillin, 4-hydroxy-2(or 5)-ethyl-5 (or 2)-methyl-3 (2H)furanone, 2-hydroxy-3-methyl-2-cyclopentenone, 3-hydroxy-4,5-dimethyl-2(5H)-furanone, acetic acid isoamyl ester, butyric acid ethyl ester, butyric acid-n-butyl ester, butyric acid isoamyl ester, 3-methyl-butyric acid ethyl ester, n-hexanoic acid ethyl ester, n-hexanoic acid allyl ester, n-hexanoic acid-n-butyl ester, n-octanoic acid ethyl ester, ethyl-3-methyl-3-phenylglycidate, ethyl-2-trans-4-cis-decadienoate, 4-(p-hydroxyphenyl)-2-butanone, 1,1-dimethoxy-2,2,5-trimethyl-4-hexane, 2,6-dimethyl-5-hepten-1-al and phenylacetaldehyde, 2-methyl-3-(methylthio)furan, 2-methyl-3-furanthiol, bis(2-methyl-3-furyl)disulphide, furfurylmercaptan, methional, 2-acetyl-2-thiazoline, 3-mercapto-2-pentanone, 2,5-dimethyl-3-furanthiol, 2,4,5-trimethylthiazole, 2-acetylthiazole, 2,4-dimethyl-5-ethylthiazole, 2-acetyl-1-pyrroline, 2-methyl-3-ethylpyrazine, 2-ethyl-3,5-dimethylpyrazine, 2-ethyl-3,6-dimethylpyrazine, 2,3-diethyl-5-methylpyrazine, 3-isopropyl-2-methoxypyrazine, 3-isobutyl-2-methoxypyrazine, 2-acetylpyrazine, 2-pentylpyridine, (E,E)-2,4-decadienal, (E,E)-2,4-nonadienal, (E)-2-octenal, (E)-2-nonenal, 2-undecenal, 12-methyltridecanal, 1-penten-3-one, 4-hydroxy-2,5-dimethyl-3 (2H)-furanone, guaiacol, 3-hydroxy-4,5-dimethyl-2(5H)-furanone, 3-hydroxy-4-methyl-5-ethyl-2(5H)-furanone, cinnamaldehyde, cinnamon alcohol, methyl salicylate, isopulegol and (here not explicitly stated) stereoisomers, enantiomers, positional isomers, diastereomers, cis/trans isomers or epimers of these substances.

In a preferred embodiment, the total amount of a mixture according to the invention, preferably containing one, two, three, four, five or a plurality of the flavourings from the above-defined group is in the range of 0.01 to 5 wt %, preferably in the range of 0.01 to 1 wt %, further preferably in the range of 0.01 to 0.5 wt %, based on the total mass of the mixture.

A mixture according to the present invention may be used in a food or beverage product to replace a part of the high caloric sugar content of the food or beverage product. In this case the mixture according to the present invention is added to the food or beverage product in which the high caloric sugar content is reduced. But it is also possible to add further high caloric sugars directly to the mixture. This resulting mixture (containing further high caloric sugars) may than be used in food or beverage products which until then do not contain high caloric sugars or just in a reduced amount.

A mixture according to the present invention is preferred, further comprising one or more carbohydrates, selected from the group consisting of sucrose, fructose, glucose, lactose, palatinose, lactulose, D-tagatose, and mixtures thereof.

A mixture according to the present invention is preferred, wherein the total amount by weight of D-allulose ranges from 0.1 to 95.0 %, based upon the total weight of the mixture.

A mixture according to the present invention may contain one or more carriers, wherein said carriers can be solid or liquid (at 25° C and 1013 mbar). As carriers, either individual substances or substance mixtures can be used.

In one embodiment, mixtures according to the invention are present in liquid form, for example as a syrup.

In one embodiment, mixtures according to the invention are preferably spray dried and the mixtures comprise solid carriers.

Advantageous solid carriers in these preferred (preferably spray dried) mixtures according to the invention are silicon dioxide (silicic acid, silica gel), carbohydrates and/or carbohydrate polymers (polysaccharides), cyclodextrins, flours, e.g. rice flour (acoording to WO 2018/219465), starches, degraded starches (hydrolysed starches), chemically or physically modified starches, modified cellulose, gum arabic, gum ghatti, tragacanth, gum karaya, carrageenan, guar germ meal, locust bean gum, alginates, pectin, inulin or xanthan gum. Preferred hydrolysed starch products are maltodextrins and dextrins.

Preferred solid carriers are silicon dioxide, flours, gum arabic and maltodextrins, wherein maltodextrins with DE values in the range of 5 to 20 are preferred. It is unimportant which plant originally provided the starch for producing the starch hydrolysates. The degree of decomposition of the starch is usually denoted with the characteristic value "Dextrose Equivalent" (DE) which can vary between the limit values 0 for a long-chain glucose polymer and 100 for pure glucose. Maize-based starches are suitable and readily available, as are starches from tapioca, rice, wheat or potatoes. The carriers can also simultaneously serve as anticaking agents, as in the case of silicon dioxide.

The preferred or particularly preferred carriers are also preferred due to being completely or substantially taste-free. In this way, preferred preliminary products according to the invention can be used in many different product types and preparations because said preliminary products do not, or not substantially, influence the existing sensory profile, particularly the aroma and taste profile - apart from the unpleasant taste impressions to be masked.

Preferred liquid carriers are water, ethanol, isopropanol, glycerin, 1,2-propylene glycol, 1,3-propandiol, diacetin, triacetin and mixtures thereof. Further suitable carriers are triglycerides, preferably liquid triglycerides, for example, plant oils. Preferable are triglycerides with the same or different C6 to C10-fatty acid groups (MCT, medium-chain triglycerides), since these are also essentially taste-free.

A further aspect of the present invention relates to a food or beverage product comprising a mixture according to the present invention.

Food or beverage products in the context of this text are, for example, baked products (e.g. bread, biscuits, cakes, other baked goods), confectionery (e.g. chocolates, chocolate bar products, other bar products, fruit gums, hard and soft toffees, chewing gum), alcoholic or non-alcoholic beverages (e.g. coffee, tea, wine, wine-containing beverages, beer, beer-containing beverages, liqueurs, spirits, brandies, fruit-containing lemonades, isotonic beverages, refreshing beverages, nectars, fruit and vegetable juices, fruit or vegetable juice preparations), instant beverages (e.g. instant-cocoa beverages, instant-tea beverages, instant-coffee beverages), meat products (e.g. ham, processed sausage or raw sausage preparations, spiced or marinated fresh or cured meat products), eggs or egg products (dried egg, egg white, egg yolk), cereal products (e.g. breakfast cereals, muesli bars, precooked prepared rice products), milk products (e.g. milk beverages, milk ices, yoghurt, kefir, fresh cheese, soft cheese, hard cheese, dried milk powder, whey, butter, buttermilk, partially or fully hydrolyzed lactoprotein-containing products), products from soybean protein or other soybean fractions (e.g. soybean milk and products prepared therefrom, preparations containing soybean lecithin, fermented products such as tofu or tempeh or products prepared therefrom, soy sauces), fruit preparations (e.g. jellies, fruit ices, fruit sauces, fruit fillings), vegetable preparations (e.g. ketchup, sauces, dried vegetables, frozen vegetables, precooked vegetables, vegetables pickled in vinegar, preserved vegetables), nibbles (e.g. baked or fried potato chips or potato dough products, bread dough products, extruded products based on maize or peanuts), fat-based and oil-based products or emulsions thereof (e.g. mayonnaise, remoulade, dressings, seasoning preparations), other ready-meals and soups (e.g. dried soups, instant soups, precooked soups), spices, seasoning mixtures and in particular seasonings which are used, for example, in the making of snacks.

In particular in cases, where in regular food or beverage products high caloric sugars are used as bulk materials, texturizers, fillers and stabilizators, namely baked products (e.g. bread, biscuits, cakes, other baked goods), confectionery (e.g. chocolates, chocolate bar products, other bar products, fruit gums, hard and soft toffees, chewing gum), cereal products (e.g. breakfast cereals, muesli bars, precooked prepared rice products), fruit preparations (e.g. jellies, fruit ices, fruit sauces, fruit fillings), vegetable preparations (e.g. ketchup, sauces, dried vegetables, frozen vegetables, precooked vegetables, vegetables pickled in vinegar, preserved vegetables), the amount of high caloric sugars can be partly replaced by the mixtures according to the present invention. In a preferred embodiment of these food or beverage products, further technologies to replace high caloric sugar load can be achieved in combinations of a mixture according to the present invention with technologies according to the PCT application with application number PCT/EP2018/069323.

The food or beverage products within the meaning of the invention can also be present as dietary supplements in the form of capsules, tablets (uncoated and coated tablets, e.g. gastro-resistant coatings), sugar-coated pills, granulates, pellets, solid mixtures, dispersions in liquid phases, as emulsions, as powders, as solutions, as pastes or as other formulations that can be swallowed or chewed.

Chewing gums (as a further example of food or beverage products) generally comprise a chewing gum base, i.e. a chewing mass that becomes plastic when chewed, other taste correctives for unpleasant taste impressions, taste modulators for further, generally not unpleasant taste impressions, taste-modulating substances (e.g. inositol phosphate, nucleotides such as guanosine monophosphate, adenosine monophosphate or other substances such as sodium glutamate or 2-phenoxypropionic acid), humectants, thickeners, emulsifiers, further flavours and stabilisers or odour correctives.

Afood or beverage product according to the present invention is preferred, wherein the amount of all compounds of group a) and b) contributes less than 2.0 % sucrose sweetness equivalents to the food or beverage product, preferably less than 1.5 % sucrose sweetness equivalents.

Sucrose sweetness equivalents means the average sweetness perception of a food or beverage product containing the mixture according to the present invention in comparison to the same food or beverage product containing a certain %level of sucrose but not the mixture according to the present invention.

A food or beverage product according to the present invention is preferred, wherein the sum of all compounds of group a) and b) is below its sweetness threshold. The sum of all compounds of group a) and b) is below its sweetness threshold if a food or beverage product in witch compounds a) and b) are exchanged by 1.5 wt.% sucrose is compared with the food or beverage product and the food or beverage product according to the present invention is less or equally sweet.

Afood or beverage product according to the present invention is preferred, wherein the amount of D-allulose ranges from 0.01 to 3.0 wt.%, preferably ranges from 0.25 to 2.7 wt.%, more preferably ranges from 1.0 to 2.0 wt.%, based upon the total weight of the food or beverage product.

In some embodiments of the present invention a food or beverage product according to the present invention may be preferred, wherein the amount of D-allulose ranges from 0.25 to 15.0 wt.%, preferably ranges from 1.0 to 10.0 wt.%, more preferably ranges from 2.0 to 7.5 wt.%, based upon the total weight of the food or beverage product.

As further constituents for food or beverage products according to the present invention or for mixtures according to the present invention, it is possible to use usual base materials, auxiliaries and additives for foodstuffs and semiluxury food products, for example, water, mixtures of fresh or processed plant or animal basic or raw materials (e.g. raw, roasted, dried, fermented, smoked and/or boiled meat, bone, cartilage, fish, vegetables, fruit, herbs, nuts, vegetable or fruit juices or pastes or mixtures thereof), natural or hardened fats (e.g. tallow, lard, palm oil, coconut oil, hardened plant fat), oils (e.g. sunflower oil, peanut oil, corn oil, olive oil, fish oil, soybean oil, sesame oil), fatty acids or salts thereof (e.g. potassium stearate), proteinogenic or nonproteinogenic amino acids and related compounds (e.g. γ-aminobutyric acid, taurine), peptides (e.g. glutathione), native or processed proteins (e.g. gelatin), enzymes (e.g. peptidases), nucleic acids, nucleotides, other flavour correctants for unpleasant taste impressions, taste modulators for further, as a rule not unpleasant, taste impressions, flavour-modulating substances (e.g. inositol phosphate, nucleotides such as guanosine monophosphate, adenosine monophosphate or other substances such as sodium glutamate or 2-phenoxypropionic acid), emulsifiers (e.g. lecithins, diacylglycerols, gum arabic), stabilisers (e.g. carrageenan, alginate), preservatives (e.g. benzoic acid, sorbic acid), antioxidants (e.g. tocopherol, ascorbic acid), chelating agents (e.g. citric acid), organic or inorganic acidifying agents (e.g. malic acid, acetic acid, citric acid, tartaric acid, phosphoric acid), additional bitter substances (e.g. quinine, caffeine, limonin, amarogentin, humolones, lupolones, catechins, tannins), mineral salts (e.g. sodium chloride, potassium chloride, magnesium chloride, sodium phosphates), substances preventing enzymatic browning (e.g. sulphite, ascorbic acid), essential oils, plant extracts, natural or synthetic dyes or coloured pigments (e.g. carotenoids, flavonoids, anthocyans, chlorophyll and derivatives thereof), spices, trigeminally effective substances or plant extracts containing said trigeminally effective substances, synthetic, natural or nature-identical aromatic substances or odoriferous substances and odour correctants.

Preferred according to the invention is a food or beverage product, additionally comprising one, two, three, four, five, six, seven, eight, nine, ten or a plurality of further substances, selected from the following groups (a1) to (a3):
(a1) flavourings, preferably one, two, three, four, five or a plurality of flavourings being selected from the group consisting of: vanillin, ethyl vanillin, 2-hydroxy-4-methoxybenzaldehyde, ethyl vanillin isobutyrate (=3 ethoxy-4-isobutyryloxybenzaldehyde), Furaneol® (2,5-dimethyl-4-hydroxy-3(2H)-furanone) and derivatives (e.g. homofuraneol, 2-ethyl-4-hydroxy-5-methyl-3(2H)-furanone), homofuronol (2-ethyl-5-methyl-4-hydroxy-3(2H)-furanone and 5-ethyl-2-methyl-4-hydroxy-3(2H)-furanone), maltol and its derivatives (e.g. ethyl maltol), coumarin and its derivatives, gamma-lactones (e.g. gamma-undecalactone, gamma-nonalactone), delta-lactones (e.g. 4-methyl delta-lactone, massoia lactone, deltadecalactone, tuberolactone), methyl sorbate, divanillin, 4-hydroxy-2(or 5)-ethyl-5(or 2)-methyl-3(2H)furanone, 2-hydroxy-3-methyl-2-cyclopentenone, 3-hydroxy-4,5-dimethyl-2(5H)-furanone, fruit esters and fruit lactones (e.g. acetic acid n-butyl ester, acetic acid isoamyl ester, propionic acid ethyl ester, butyric acid ethyl ester, butyric acid n-butyl ester, butyric acid isoamyl ester, 3-methyl-butyric acid ethyl ester, n-hexanoic acid ethyl ester, n-hexanoic acid allyl ester, n-hexanoic acid n-butyl ester, n-octanoic acid ethyl ester, ethyl-3-methyl-3-phenylglycidate, ethyl-2-trans-4-cis-decadienoate), 4-(p-hydroxyphenyl)-2-butanone, 1,1-dimethoxy-2,2,5-trimethyl-4-hexane, 2,6-dimethyl-5-hepten-1-al and phenylacetaldehyde;
(a2) sugar alcohols, preferably naturally occurring sugar alcohols selected from the group consisting of glycerine, erythritol, threitol, arabitol, ribitol, xylitol, sorbitol, mannitol, maltitol, isomalt, dulcitol, lactitol, and the physiologically acceptable salts of these sugar alcohols, particularly sodium, potassium, calcium or ammonium salts;
(a3) extracts or enriched fractions of extracts, selected from the group consisting of *Thaumatococcus* fruit extracts (katemfe bush), extracts from *Stevia* ssp. (particularly *Stevia rebaudiana* leaves), swingle extracts (*Momordica* or *Siratia grosvenorii*, fruit, Luo-Han-Guo, monk fruit), extracts from Glycerrhyzia ssp. (particularly *Glycerrhyzia glabra* roots), extracts from Rubus ssp. (particularly *Rubus suavissimus.* leaves), extracts from *Lippia dulcis* (leaves and flowers).

A food or beverage product according to the present invention is preferred, wherein the amount of D-allulose and of all compounds of group b) ranges from 0.01 to 3.0 wt.%, preferably ranges from 0.25 to 2.7 wt.%, more preferably ranges from 1.0 to 2.0 wt.%, based upon the total weight of the food or beverage product.

A food or beverage product according to the present invention is preferred, further comprising one or more carbohydrates, selected from the group consisting of sucrose, D-fructose, D-glucose, lactose, palatinose, lactulose, D-tagatose, and mixtures thereof.

A food or beverage product according to the present invention is preferred, further comprising an artificial sweetener and/or natural high-potency sweetener, preferably selected from the group consisting of sucralose, acesulfame potassium or other salts, aspartame, alitame, sodium or calcium salt of saccharin, neohesperidin dihydrochalcone, sodium cyclamate, neotame, advantame, and salts thereof, steviol glycoside, rebaudioside A, rebaudioside B, rebaudioside C (dulcoside B), rebaudioside D, rebaudioside E, rebaudioside F, rebaudioside I, rebaudioside H, rebaudioside L, rebaudioside K, rebaudioside J, rebaudioside N, rebaudioside O, rebaudioside M, rebaudioside X, dulcoside A, rubusoside, stevia leaf extract, stevioside, glycosylated steviol glycosides, mogroside V, isomogroside, mogroside IV, Luo Han Guo fruit extract, siamenoside, monatin and its salts (monatin SS, RR, RS, SR), curculin, glycyrrhizic acid and its salts, thaumatin, monellin, mabinlin, brazzein, hernandulcin, glycyphyllin, phloridzin, trilobatin, baiyunoside, osladin, polypodoside A, pterocaryoside A, pterocaryoside B, mukurozioside, phlomisoside I, periandrin I, abrusoside A, cyclocarioside I, and combinations thereof.

Afood or beverage product according to the present invention is preferred, wherein the sum of all carbohydrates, except of D-allulose, and all artificial and natural sweeteners cause a sweet intensity of at least 2 % sucrose sweetness equivalents, preferably of at least 3 % sucrose sweetness equivalents, more preferably of at least 5 % sucrose sweetness equivalents, more preferably of at least 7 % sucrose sweetness equivalents.

A further aspect of the present invention relates to a method for imparting a sweet taste impression and/or reinforcing a sweet taste impression of one, two or a plurality of sweet-tasting substances and/or producing an orally consumable formulation comprising the following steps:
a) providing a mixture according to the present invention,
b) providing an orally consumable formulation comprising one, two or a plurality of sweet-tasting substances, and
c) bringing into contact or mixing of the ingredients provided in steps a) and b).

### Examples:

### Example 1: Ice Tea

### Comparative Example with sucrose (A)

### Comparative Example with sucrose and D-allulose (B)

### Examples according to the invention with D-allulose and a taste modifying compound (C-H)

| | Preparation (wt.-% or ppm if specified accordingly) | | | | | | | |
|---|---|---|---|---|---|---|---|---|
| Ingrediens | **A** | **B** | **C** | **D** | **E** | **F** | **G** | **H** |
| sucrose | 7 | 3.5 | 3.5 | 3.5 | 3.5 | 3.5 | 1.5 | - |
| D-allulose | - | 2 | 2 | 2 | 2 | 2 | 3 | 7 |
| Hesperetin (HT) | - | - | 5ppm | - | - | - | - | 7 ppm |
| Phloretin (PH) | - | - | - | 15 ppm | - | - | - | 15 pmm |
| Hersperetin dihydrochalcone (HC) | - | - | - | - | 15 ppm | - | 5ppm | - |
| Alpha-glycosylated rubusosides (OR) | - | - | - | - | - | 10 ppm | 10 ppm | - |
| Citric acid | 0.15 | 0.15 | 0.15 | 0.15 | 0.15 | 0.15 | 0.15 | 0.15 |
| ascorbic acid | 0.02 | 0.02 | 0.02 | 0.02 | 0.02 | 0.02 | 0.02 | 0.02 |
| Black tea extrakt | 0.15 | 0.15 | 0.15 | 0.15 | 0.15 | 0.15 | 0.15 | 0.15 |
| natural lemon flavor | 0.1 | 0.1 | 0.1 | 0.1 | 0.1 | 0.1 | 0.1 | 0.1 |
| water | to 100% | | | | | | | |

The ingredients were mixed in the order listed in the order listed into bottled and sterilized.

According to sensory studies, the examples C-H show a better sweet impact, intensity, and mouthfeel without significantly increasing sweet lingering effects. The acidity is reduced in the formulations compared to allulose alone (B).

### Example 2: Carbonated Soft Drink (Flavour Direction: Cola)

| **Ingredient** | **A** (% by weight) | **B** (% by weight) | **C** (% by weight) | **D** (% by weight) | **E** (% by weight) |
|---|---|---|---|---|---|
| Phosphoric acid 85% | 0.635 | 0.635 | 0.635 | 0.635 | 0.635 |
| Citric acid, anhydrous | 0.064 | 0.064 | 0.064 | 0.064 | 0.064 |
| Caffeine | 0.064 | 0.064 | 0.064 | 0.064 | 0.064 |
| Sucrose | 63.60 | - | - | - | 12.9 |
| Rebaudioside M | - | 0.200 | - | - | - |
| Glycosylated steviosides | - | - | 0.150 | - | - |
| Aspartame | - | - | - | - | 0.07 |
| Rebaudioside A | - | - | - | 0.150 | - |
| Acesulfame K | - | - | - | - | 0.07 |
| Mogroside V | - | - | - | 0.150 | - |
| Sugar colouring | 0.800 | 0.800 | 0.800 | 0.800 | 0.800 |
| Cola type drink emulsion | 1.445 | 1.445 | 1.445 | 1.445 | 1.445 |
| Sodium benzoate | 0.106 | 0.106 | 0.106 | 0.106 | 0.106 |
| D-Allulose | 10 | 8 | 8 | 12 | 8 |
| Hesperetin, racemic, 2.5% in 1,2-propylene glycol | - | 2.0 | 2.0 | - | - |
| Phloretin, 2.5% in 1,2-propylene glycol | - | - | 1.0 | - | - |
| Phyllodulcin, 0.5% in 1,2-propylene glycol | - | - | - | 1.0 | - |
| Hesperetin dihydrochalcone (I) 0.5% in 1,2-propylene glycol | - | - | - | - | 1.0 |
| Water | ad 100 | | | | |

| | | | | | |
|---|---|---|---|---|---|
| A: drink containing sugar (comparative drink) B: low-calorie drink C: low-calorie drink D: low-calorie drink E: low-calorie drink | | | | | |

The solid components or ingredients are individually mixed with water, combined and made up to 100 g with water. The concentrate obtained is then allowed to age over night at ambient temperature. Finally, 1 part concentrate is mixed with 5 parts carbonated water, filled into bottles and sealed.

### Example 3: Sugar-reduced tomato ketchup

| Ingredient | Preparation (amounts in % by weight) | | | | | | | |
|---|---|---|---|---|---|---|---|---|
| | A | B | C | D | E | F | G | H |
| Common salt | 2.0 | 2.0 | 2.0 | 2.0 | 2.0 | 2.0 | 2.0 | 2.0 |
| Starch, Farinex WM 55 | 1.0 | 1.0 | 1.0 | 1.0 | 1.0. | 1.0 | 1.0 | 1.0 |
| Sucrose | 12.0 | 9.6 | 9.2 | 8.4 | 9.6 | 9.6 | 5 | - |
| Tomato concentrate x 2 | 40.0 | 40.0 | 40.0 | 40.0 | 30.0 | 30.0 | 30.0 | 30.0 |
| Glucose syrup 80 Brix | 18.0 | 18.0 | 18.0 | 18.0 | 18.0 | 18.0 | 18.0 | 18.0 |
| Spirit vinegar 10% | 7.0 | 7.0 | 7.0 | 7.0 | 3.0 | 3.0 | 3.0 | 3.0 |

| ***Flavoring Part:*** | | | | | | | | |
|---|---|---|---|---|---|---|---|---|
| spice flavour | 0,1 | 0,1 | 0,1 | 0,1 | 0,1 | 0,1 | 0,1 | 0,1 |
| D-Allulose | - | - | 1 | 1.5 | 1 | 1 | 5 | 12 |
| Hesperetin 2.5% in 1,2-Propylene glycol | - | - | 0.1 | 0.1 | - | 0.1 | - | 0.1 |
| Phloretin 2.5% in 1,2-Propylene glycol | - | - | 0.1 | 0.1 | - | 0.1 | - | 0.1 |
| Alpha-Glycosylated rubusoside | - | - | - | 0.1 | 0.1 | 0.05 | - | - |
| Hesperetin dihydrochalcone 0,5% in 1,2-Propylene glycol | - | - | - | - | - | - | 0.2 | - |
| Phyllodulcin, 0.5 % in ethanol/1,2-propylene glycol | - | - | - | - | 0.2 | 0.1 | - | 0.2 |
| Water | ad 100 | | | | | | | |

| | | | | | | | | |
|---|---|---|---|---|---|---|---|---|
| A: Comparative preparation with sugar B: Comparative preparation with reduced sugar content (compared to A) C-H: Preparations according to the invention with reduced sugar content (compared to A) and mixture | | | | | | | | |

The *Flavoring Part* is mixed first and added to the other ingredients which are mixed in the stated sequence and the finished ketchup is homogenized using an agitator, poured into bottles and sterilized.

### Example 4: Reduced-sugar fruit gums

| ***Ingredient*** | **A** (% by weight) | **B** (% by weight) | **C** (% by weight) | **D** (% by weight) | **E** (% by weight) |
|---|---|---|---|---|---|
| Saccharose | 34.50 | 8.20 | 8.20 | 9.0 | 0 |
| Glucose syrup, DE 40 | 31.89 | 30.09 | 30 | 30 | 35 |
| Iso Syrup C* Tru Sweet 01750 (Cerestar GmbH) | 1.50 | 2.10 | 1.5 | 2 | 3 |
| Gelatin 240 Bloom | 8.20 | 9.40 | 10 | 8.5 | 9 |
| Polydextrose (Litesse® Ultra, Danisco Cultor GmbH) | - | 24.40 | 25 | 23 | - |
| Green, yellow and red colorings | 0.01 | 0.01 | 0.01 | 0.01 | 0.01 |
| Citric acid | 0.20 | 0.20 | 0.20 | 0.20 | 0.20 |
| D-Allulose | - | 2 | 2.5 | 1.5 | 34 |
| Orange flavour, containing 1 % by weight hesperetin | - | 0.5 | - | - | - |
| Strawberry flavour, containing 0.5 % Phloretin and 0.5 % Hesperetin | - | - | 0.4 | - | - |
| Apple flavour, containing 0.5 % Phloretin and 0.5 % Hesperetin | - | - | - | 0.35 | - |
| Cherry flavoring, containing 1 % by weight of hesperetin dihydrochalcone (I) based on the flavoring | - | - | - | - | 0.10 |
| Water | Quantum satis 25.80 | | | | |

| | | | | | |
|---|---|---|---|---|---|
| Note: Polydextrose is itself a non-sweet-tasting polysaccharide with a low calorific value. A: Comparative preparation B - E: preparation according to the present invention | | | | | |

### Example 5: Spray-Dried Preparation as a Semi-Finished Product for Flavoring of Finished Products

| **Ingredient** | **Use in % by weight** | | | | | |
|---|---|---|---|---|---|---|
| **Preparation** | **A** | **B** | **C** | **D** | **E** | **F** |
| Maltodextrin from wheat | 10 | 5 | 5 | 0 | - | 5 |
| Rice flour according to WO 2018 219,465 | - | - | - | - | 10 | - |
| Gum Arabic | 0.5 | 1 | 0.5 | 1 | 0.3 | - |
| D-Allulose, crystalline | 20 | 25 | 25 | 0 | 30 | 25 |
| D-Allulose, syrup | - | - | - | 30 | - | - |
| Hesperetin dihydrochalcone (I) | 0.05 | - | - | - | - | - |
| Hesperetin | - | 0.2 | - | 0.3 | 0.3 | - |
| Homoeriodictyol-sodium salt | - | - | - | 0.2 | - | - |
| Phloretin | - | - | 0.5 | - | 0.2 | - |
| Extract from Hydrangea dulcis, ctg. 40% Phyllodulcin | - | - | - | - | - | 0.02 |
| Drinking water | Add to 100 | | | | | |

The drinking water is placed in a container and maltodextrin and gum arabic is dissolved in it. Then the flavoring is emulsified in the carrier solution with a Turrax. The temperature of the spray solution should not exceed 30 °C. The mixture is then spray-dried (inlet nominal temperature: 185-195 °C, outlet nominal temperature: 70-75 °C).

Typical dosage: 1-3 % by weight depending on the application.

### Example 6: Instant Ice Tea Type Peach

| **Ingredient** | **Use in weight%** | | | |
|---|---|---|---|---|
| **Preparation** | **A** | **B** | **C** | **D** |
| Sucrose, extra fine | 95.06 | 70.09 | 70.25 | - |
| Citric acid, anhydrous | 2.2 | 2.0 | 2.0 | 1.8 |
| Black Tea extract, powdered | 1.34 | 1.34 | 1.34 | 1.34 |
| Peach aroma spray dried | 0.66 | 0.66 | 0.66 | 0.66 |
| Tea aroma type Ceylon dried | 0.27 | 0.27 | 0.27 | 0.27 |
| Trisodium citrate | 0.25 | 0.25 | 0.25 | 0.25 |
| Ascorbic acid | 0.22 | 0.22 | 0.22 | 0.22 |
| Polydextrose | - | - | - | 25 |
| D-Allulose, crystalline | - | 25 | 25 | 70 |
| Hesperetin dihydrochalcone (I) | - | - | 0.01 | 0.01 |
| Hesperetin | - | 0.05 | - | - |
| Rebaudioside A | - | - | - | 0.01 |
| Phloretin | - | 0.02 | - | - |
| Rebaudioside M | - | - | - | 0.20 |
| Homoeriodictyol-Sodium salt | - | 0.1 | - | 0.05 |

| | | | | |
|---|---|---|---|---|
| Preparation A: standard preparation Preparation B-D: preparation according to the present invention Standard dosage in water for preparing a peach ice tea beverage: 7.5 % by weight | | | | |

.

### Example 7: Drink Chocolate Instant Powder

| **Ingredient** | **Use in weight%** | | | |
|---|---|---|---|---|
| **Preparation** | **A** | **B** | **C** | **D** |
| Sucrose, extra fine | 73.5 | 48.475 | 43.69 | 13.325 |
| Cocoa powder alkalized, 10-12 % by weight fat | 25.0 | 25.0 | 25.0 | 25.0 |
| Maltodextrin DE15-19 from corn starch | 0.43 | 0.43 | 0.43 | 0.43 |
| Salt (NaCl), extra fine | 0.43 | 0.43 | 0.43 | 0.43 |
| Ascorbic acid | 0.29 | 0.29 | 0.29 | 0.29 |
| Vitamin mix M8 40-1507 | 0.145 | 0.145 | 0.145 | 0.145 |
| D-Allulose, crystalline | - | 25 | 30 | 60 |
| Hesperetin dihydrochalcone (I) | - | - | 0.015 | 0.01 |
| Hesperetin | - | 0.05 | - | - |
| Rebaudioside A | - | - | - | 0.02 |
| Phloretin | - | 0.03 | - | - |
| Rebaudioside M | - | - | - | 0.30 |
| Homoeriodictyol-Sodium salt | - | 0.15 | - | 0.05 |

| | | | | |
|---|---|---|---|---|
| Preparation A: standard preparation Preparation B-D: preparation according to the present invention Standard dosage in milk for preparing an choco beverage: 6.9 % by weight. | | | | |

## Claims

1. A mixture comprising or consisting of
a) D-allulose
and
b) a taste modifying compound selected from the group consisting of hesperetin, hesperetin dihydrochalcone, phloretin, alpha-glycosyl rubusosides, balansines, phyllodulcin, eriodictyol, homoeriodictyol, matairesinol, and mixtures thereof.

2. A mixture according to claim 1, wherein the mixture comprises
b1) a taste modifying compound selected from the group consisting of hesperetin, homoeriodictyol, eriodictyol, phloretin, matairesinol, and mixtures thereof
and
b2) a taste modifying compound selected from the group consisting of hesperetindihydrochalcone, alpha-glycosyl rubusosides, balansines, phyllodulcin, and mixtures thereof.

3. A mixture according to claim 1 or 2, wherein the weight ratio of D-allulose to the total mass of all compounds of group b) ranges from 100,000 : 1 to 10 : 1, preferably ranges from 50,000 : 1 to 50 : 1, more preferably ranges from 50,000 : 1 to 100 : 1.

4. A mixture according to claim 2 or 3, wherein the weight ratio of the total mass of all compounds of group b1) to the total mass of all compounds of group b2) ranges from 100 : 1 to 1 : 100, preferably ranges from 10 : 1 to 1 : 10, more preferably, from 5 : 1 to 1 : 5.

5. A mixture according to any of the preceding claims, further comprising one or more substances, selected from the group consisting of flavorings and/or aromatic substances.

6. A mixture according to any of the preceding claims, further comprising one or more carbohydrates, selected from the group consisting of sucrose, D-fructose, D-glucose, lactose, palatinose, lactulose, D-tagatose, and mixtures thereof.

7. A mixture according to any of the preceding claims, wherein the total amount by weight of D-allulose ranges from 0.1 to 95.0 %, based upon the total weight of the mixture.

8. A food or beverage product comprising a mixture according to any of the preceding claims.

9. A food or beverage product according to claim 8, wherein the amount of all compounds of group a) and b) contributes less than 2.0 % sucrose equivalents to the food or beverage product, preferably less than 1.5 % sucrose equivalents.

10. A food or beverage product according to claim 8 or 9, wherein the sum of all compounds of group a) and b) is below its sweetness threshold.

11. A food or beverage product according to any one of the claims 8 to 10, wherein the amount of D-allulose ranges from 0.01 to 3.0 wt.%, preferably ranges from 0.25 to 2.7 wt.%, more preferably ranges from 1.0 to 2.0 wt.%, based upon the total weight of the food or beverage product.

12. A food or beverage product according to any one of the claims 8 to 11, wherein the amount of D-allulose and of all compounds of group b) ranges from 0.01 to 3.0 wt.%, preferably ranges from 0.25 to 2.7 wt.%, more preferably ranges from 1.0 to 2.0 wt.%, based upon the total weight of the food or beverage product.

13. A food or beverage product according to any one of the claims 8 to 12, further comprising an artificial sweetener and/or natural high-potency sweetener, preferably selected from the group consisting of sucralose, acesulfame potassium or other salts, aspartame, alitame, sodium or calcium salt of saccharin, neohesperidin dihydrochalcone, sodium cyclamate, neotame, advantame, and salts thereof, steviol glycoside, rebaudioside A, rebaudioside B, rebaudioside C (dulcoside B), rebaudioside D, rebaudioside E, rebaudioside F, rebaudioside I, rebaudioside H, rebaudioside L, rebaudioside K, rebaudioside J, rebaudioside N, rebaudioside O, rebaudioside M, rebaudioside X, dulcoside A, rubusoside, stevia leaf extract, stevioside, glycosylated steviol glycosides, mogroside V, isomogroside, mogroside IV, Luo Han Guo fruit extract, siamenoside, monatin and its salts (monatin SS, RR, RS, SR), curculin, glycyrrhizic acid and its salts, thaumatin, monellin, mabinlin, brazzein, hernandulcin, glycyphyllin, phloridzin, trilobatin, baiyunoside, osladin, polypodoside A, pterocaryoside A, pterocaryoside B, mukurozioside, phlomisoside I, periandrin I, abrusoside A, cyclocarioside I, and combinations thereof.

14. A food or beverage product according to any one of the claims 8 to 13, wherein the sum of all carbohydrates, except of D-allulose, and all artificial and natural sweeteners cause a sweet intensity of at least 2 % sucrose equivalents, preferably of at least 3 % sucrose equivalents, more preferably of at least 5 % sucrose equivalents, more preferably of at least 7 % sucrose equivalents.

15. A method for imparting a sweet taste impression and/or reinforcing a sweet taste impression of one, two or a plurality of sweet-tasting substances and/or producing an orally consumable formulation comprising the following steps:
a) providing a mixture according to any one of the claims 1 to 7,
b) providing an orally consumable formulation comprising one, two or a plurality of sweet-tasting substances, and
c) bringing into contact or mixing of the ingredients provided in steps a) and b).
